# EUROPEAN PATENT APPLICATION

(11) **EP 1 157 887 A2**
(43) Date of publication of application: **28.11.2001**
(21) Application number: 01304306.2
(22) Date of filing: 15.05.2001
(51) Int. Cl.: B60Q 1/068

(54) **A headlamp for vehicles**

(30) Priority: 23.05.2000 CZ 20001902
(71) Applicant: Autopal, s.r.o., Novy Jicin 741 01 (CZ)
(72) Inventor: Neumann, Vilém, Koprivnice 742 21 (CZ)
(74) Representative: Godwin, Edgar James

(57) **Abstract**

A headlamp for vehicles having adjustable reflector (5) mounted in a carrying part (4), whereby, said reflector (5) is rotatably mounted in said carrying part (4) by means of one fixed connecting element (11) and at least two adjustable connecting elements (92, 93). Said fixed connecting element (91), connected with said reflector (5) in a third junction point (1), is placed between a first adjustable connecting element (92) and a second adjustable connecting element (93). Said first adjustable connecting element (92) is connected with said reflector (5) in a first junction point (2), and its first actuation axis (16) is situated in a horizontal plane. Said second adjustable connecting element (93) is connected with said reflector (5) in a second junction point (3) and its actuation axis (13) is
skew with a connecting axis (12) connecting said third junction point (1) and said first junction point (2),
is oriented vertically, and
is situated behind said connecting axis (12), in the direction towards the rear headlamp side.

## Description

### Field of the Invention

The present invention relates to a headlamp for vehicles having an adjustable reflector mounted in a carrying part, whereby said reflector is rotatably mounted in said carrying part by means of one fixed connecting element and at least two adjustable connecting elements.

### Background of the Invention

A prior art design of a headlamp for vehicles is known where a reflector of said headlamp is mounted in a carrying part by means of three or more connecting elements, whereby, at least one of said connecting elements is adjustable. An important subgroup of such prior art designs is the so-called mounting with a fixed point. In this case, one of the connecting elements is a point firmly connected with the carrying part, whereby, said reflector is mounted on said carrying part by joints but without any clearance and said reflector can swing around said point. The swinging axis of said reflector always passes through this fixed point. An advantage of the mounting with a fixed point is a better starting position for enhanced dynamic properties of the reflector suspension. Especially a better bearing of vertical forces due to a mounting without any clearances of one of the reflector beds at a firm fixed point and further the fully independent adjusting in the horizontal and vertical planes by means of two adjustable connecting elements, whereby, by adjusting of each of said elements the reflector inclination can be changed only in one axis. In case of a suitable position of the fixed point, another advantage is the possibility to minimize the visible gap at the bottom between the reflector and the external headlamp mask, what is important in advanced headlamps with a transparent covering glass. Size of said gap is given by the necessary minimal space for all allowable inclinations of said reflector to the external mask or the carrying part. Because of the reason mentioned above, it is advantageous if the fixed point is situated in the bottom part, i.e. at the bottom edge of said reflector, in the ideal case then approximately in the middle of the reflector width. For good operation of this suspension system with a fixed point, it is preferable if the first of the adjustable connecting elements is placed approximately at the horizontal axis passing through the fixed point and the other one then approximately on the vertical axis passing through the fixed point. The other adjustable connecting element is then carried out so that its actuating member can be adjusted mechanically on said headlamp and simultaneously it is the actuating member of an automatic controller of the light beam incidence distance. This design is disclosed in EP 01301384.2 and CZ Pat. Appl. No. PV 2000-560, see example according to Fig. 5 therein. This design solves the problem of compensating the mutual radial shifts between a reflector bed and an actuating member of an adjustable connecting element and the requirement of good reflector suspension in the vertical direction.

The above mentioned space requirements regarding the positioning of the connecting elements in the prior art system of suspension with a fixed point can, in a specific application, cause a design problem owing to the limited space available considering that it is required to place an automatic controller of the light beam incidence distance above the fixed point. In an ideal case, this couple of connecting elements should be situated approximately in the middle of the reflector width. Such requirements can be unsuitable, especially in case of a group of headlamps with advanced, the so-called elliptic-dioptric (ED) modules that are bulky and especially relatively very massy. In such cases, the requirement of good dynamic properties of the system of reflector suspension, especially in the vertical direction, is more and more important and requires to optimise the positions of individual connecting elements, eventually to find new design solutions of the suspension system. Considering the principle, the suspension system with a fixed point is suitable for this application regarding the dynamic properties. But in case of a specific requirement on fixed point position, which position is significantly related with the position of the automatic controller of the light beam incidence distance, considering the spatial possibility of the headlamp, significant problems may arise in case of a design of such reflector suspension. Such problems may be a design obstacle preventing use of such a system. Another group of headlamps, where the above-mentioned problem can be expected, are headlamps of vertically narrow design, but they are rather frequently used in advanced vehicles.

### Summary of the Invention

The above mentioned drawbacks are substantially eliminated by a headlamp for vehicles having adjustable reflector mounted in a carrying part. Reflector is rotatably mounted in said carrying part by means of one fixed connecting element and at least two adjustable connecting elements. The present invention is consisting in that said fixed connecting element, connected with said reflector in a third junction point, is placed between a first adjustable connecting element and a second adjustable connecting element, whereby, said first adjustable connecting element is connected with said reflector in a first junction point, and its first actuation axis is situated in a horizontal plane and, whereby, said second adjustable connecting element is connected with said reflector in a second junction point and its actuation axis is skew with a connecting axis connecting said third junction point and said first junction point, is oriented vertically, and is situated behind said connecting axis, in the direction towards the rear headlamp side. Preferably, said fixed connecting element is in the bottom part of said reflector.

Preferably, said fixed connecting element comprises a fixed joint head, which fixed joint head is mounted in the reflector bed in said third junction point, and is firmly connected with said carrying part or is apart from said carrying part.

The headlamp according to the present invention represents a new design of the reflector suspension system provided with a fixed point. In a headlamp according to the present invention the fixed junction point is placed between both adjustable junction points. Preferably, the adjustable junction points can be placed in the end areas of said headlamp. Thereby, maximal space remains available for placing of various reflector designs. The first adjusting axis of the first adjusting member of the first adjustable connecting element is oriented in a horizontal plane and serves to swinging said reflector in the horizontal direction around a vertical axis passing through said fixed junction point. The second adjustment axis of the second actuating member of the second adjustable connecting element is oriented vertically and serves to swing said reflector in the vertical direction around the connecting axis connecting said fixed junction point with the centre of the actuating member of said first adjustable connecting element. Then, said second adjustable connecting element is so designed that its actuating member can be adjusted both mechanically on said headlamp and by actuating the actuating member of an automatic controller of the light beam incidence distance. Then, the second actuation axis has to be placed behind the connecting axis connecting the fixed junction point with the centre of the actuating member of the first adjustable connecting element, because the perpendicular arm necessary to swing the reflector in the vertical direction is realized in the depth dimension of the headlamp here. This is a difference in comparison to the prior art designs, where the respective position is in the height dimension of the headlamp. So, a reflector is mounted on three points configured primarily in the ground plain.

With regard to the space required, the system of reflector suspension in question is very space-saving by configuring both adjustable connecting elements in the edges of said headlamp and by a compact structure in the height dimension of said headlamp height dimension. This is advantageous especially in case of low-height-headlamps or of headlamps with elliptic-dioptric (ED) modules. There is a relative freedom in positioning of the fixed point, whereby, it is possible to optimise dynamic characteristics of the reflector suspension, especially with regard to the specific mass distribution on said reflector. Simultaneously, it is possible to obtain the optimum position of the fixed point to minimize the bottom edge gap. The fixed point is placed in one half of the reflector width at its bottom edge.

A preferable design comprises design of said first adjustable connecting element so as it is disclosed in CZ patent Appl. No. PV 2000-560 where said adjustable connecting element comprises a first adjusting member and a first swinging suspension. Said first adjusting member is provided with a first shifting thread, and is both radially and axially mounted in said carrying part. Said first swinging suspension is rotatably mounted on a first shifting thread of said first adjusting member by means of an own first internal thread, and is provided with an adjustable joint head situated on a first actuation axis placed parallel with a first adjustment axis of said first adjusting member, which joint head (66) is connecting said first swinging suspension (62) with said reflector (5) in said first junction point (2).

Similarly to the connection in the fixed junction point, this connection with the reflector can be rigid and without any clearance, because, for compensation of mutual radial shifts it is possible to use the degrees of freedom in the tangential direction by swinging the suspension. In this case, dynamic properties of the suspension, especially bearing of vertical direction forces is improved.

Further, it is preferable to use said second adjustable connecting element, which comprises a second adjusting member and a second swinging suspension. Second adjusting member is provided with a second shifting thread, which second adjusting member is both radially and axially mounted in said carrying part, and said second swinging suspension is rotatably mounted on said second shifting thread of said second adjusting member by means of an own second internal thread, and said second adjustable connecting element bears an automatic controller (8) of the light beam incidence distance, which automatic controller (8) is firmly fixed to said second swinging suspension (63), whereby, a second actuation axis (13) of an actuating member (83) of said automatic controller (8) is parallel with a longitudinal second adjustment axis (14) of said second adjusting member (73), and said actuating member (83) is joint-connected with said reflector (5) in said second junction point (3).

This solution allows compensation of radial shifts without any problems. Such radial shifts appearing during swinging of the reflector in the horizontal plane can be significant, what depends on the position of the fixed point. Of course, they appear also during vertical plane headlamp swinging. The totally greater mutual radial shifts are no problem, as they are compensated by the swinging design of said suspension of said adjustable connecting element.

### Brief Description of the Drawings

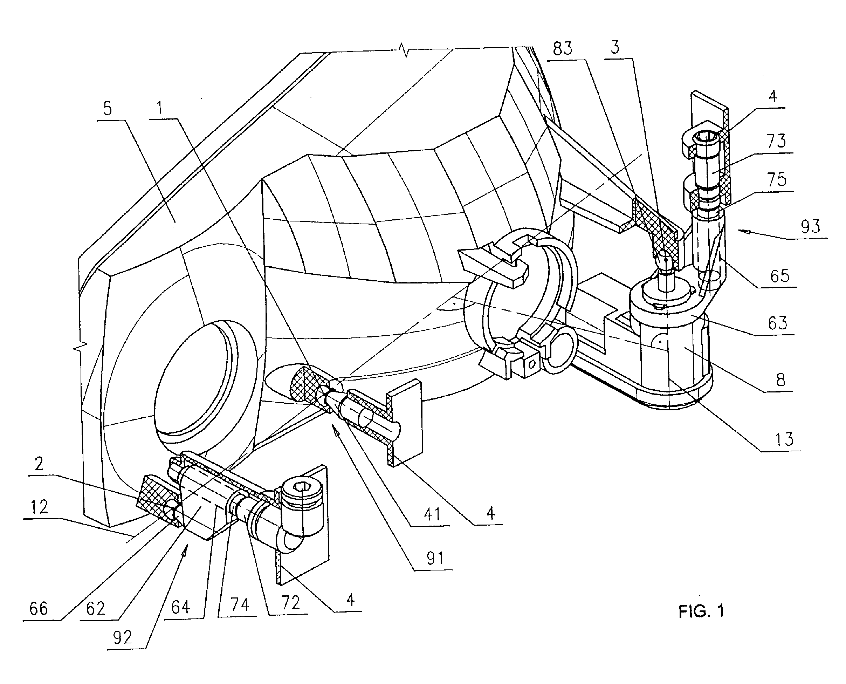

The invention in its various aspects will now be described with reference to a drawing thereof, in which Figure 1 shows a perspective view of one embodiment of said headlamp according to the present invention.

### Detailed Description of the Invention

In the embodiment illustrated, the headlamp for vehicles has an adjustable reflector 5. The reflector 5 is mounted in a carrying part 4. The reflector 5 is rotatably mounted in said carrying part 4 by means of one fixed connecting element 91 and two adjustable connecting elements, the first adjustable element 92 and the second adjustable element 93 so as shown in Fig. 1. The fixed connecting element 91 is connected with the reflector 5 in the first junction point 1 and it is situated between the first adjustable connecting element 92 and the second adjusting connecting element 93. The first adjustable connecting element 92 is connected with the reflector 5 in the second junction point 2, whereby the first adjustment axis 15 of said junction point 2 is situated in a horizontal plane. The second connecting element 93 is connected with the reflector 5 in the third junction point 3, whereby the second actuation axis 13 of said third junction point is running skew with regard to the connecting axis 12. The connecting axis 12 is a line connecting the first junction point 1 with the second junction point 2. This second actuation axis 13 is oriented vertically and it is situated behind the connecting axis 12 in the direction towards the rear side of the headlamp.

The fixed connecting element 91 is formed by the fixed joint head 41, which fixed joint head 41 is placed in the bed of the reflector 5 in the third junction point 1. The fixed joint head 41 is firmly connected with the carrying part 4.

The first adjustable connecting element 92 is formed by means of the first adjusting member 72 and by the first swinging suspension 62. The first adjusting member 72 is provided with the first shifting thread 74, whereby the first shifting thread 74 is both radially and axially mounted in the carrying part 4. The first swinging suspension 62 is rotatably mounted in the first shifting thread 74 provided in the first adjusting member 72 by the first internal thread 64. Further, the first suspension 62 is provided with an adjustable joint head 66 situated at the first actuation axis 16, whereby the first actuation axis 16 is parallel to the first adjustment axis 15 of the first adjusting member 72. The adjustable joint head 66 connects the first adjustable connecting element 92 connected with the reflector 5 in the second junction point 2.

The second adjustable element 93 is formed by means of a second adjusting member 73 and the second swinging suspension 63. The second adjusting member 73 is provided with the second shifting thread 75. Further, the second adjusting member 73 is mounted in the carrying part 4 both radially and axially. By means of the second internal thread 65, the second swinging suspension 63 is rotatably mounted on the second shifting thread 75 of the second adjusting member 73. The second swinging suspension 63 carries the automatic controller 8 of the light beam incidence distance. The automatic controller 8 is firmly connected with the second swinging suspension 63 so that the second actuation axis 13 of the actuating member 83, is parallel with the longitudinal second adjustment axis of the second adjusting member 73, whereby, the actuating member 83 is joint-connected with the reflector 5 in the second junction point 3.

The headlamp operates so that by rotating the first adjusting member 73 the first swinging suspension 62 is shifted out in axial direction. Thereby, the second junction point 2 is also shifted out in axial direction causing swinging of the reflector 5 around the vertical axis (not drawn) running through the fixed third junction point 1, i.e. swinging of the reflector 5 in the horizontal direction. The first junction point 2 is fixed both in axial and radial directions and it is allowed to move, i.e. to rotate in the tangential direction, whereby, the second junction point 2 is able to compensate mutual relative shifts in the tangential direction, which shifts are caused by movements of the reflector 5 bed in the first junction point 1 along the trajectory of a circular arc.

By rotating the second adjusting member 73, the second swinging suspension 63 is shifted out in the axial direction, whereby, the whole automatic controller 8 of the light beam incidence distance is independently adjusted, whereby, the actuating member 83 of the automatic controller 8 is adjusted in axial direction, whereby, the reflector 5 is swinging around the connecting line 12, i.e. the reflector 5 is swinging in the vertical direction. At the same time, during the proper controlling activity of the automatic controller 8, the actuating member 83 can be adjusted in the axial direction, i.e. in the direction of the second actuation axis 13, whereby, the reflector 5 is also swinging around the connecting line 12. The action member 83 is fixed both in the axial and the radial directions and it is allowed to move, i.e. to swing in the tangential direction, whereby, the action member 83 is able to compensate mutual relative movements in the tangential direction, whereby, the mutual relative movements are caused by movements of the reflector 5 bed in the second junction point 3 along the circular arc trajectory.

## Claims

1. A headlamp for vehicles having adjustable reflector mounted in a carrying part, whereby, said reflector is rotatably mounted in said carrying part by means of one fixed connecting element and at least two adjustable connecting elements, **characterised in that** said fixed connecting element (91), connected with said reflector (5) in a third junction point (1), is placed between a first adjustable connecting element (92) and a second adjustable connecting element (93),
whereby, said first adjustable connecting element (92) is connected with said reflector (5) in a first junction point (2), and its first actuation axis (16) is situated in a horizontal plane and,
whereby, said second adjustable connecting element (93) is connected with said reflector (5) in a second junction point (3) and its actuation axis (13) is
skew with a connecting axis (12) connecting said third junction point (1) and
said first junction point (2),
is oriented vertically, and
is situated behind said connecting axis (12), in the direction towards the rear headlamp side.

2. A headlamp according to Claim 2 **characterized in that** said fixed connecting element (91)
comprises a fixed joint head (41) which fixed joint head (41)
is mounted in the reflector (5) bed in said third junction point (1), and
is firmly connected with said carrying part (4) or
is apart from said carrying part (4).

3. A headlamp according to Claim 2 **characterized in that** said adjustable connecting element (92) comprises a first adjusting member (72) and a first swinging suspension (62),
whereby,
said first adjusting member (72) is
provided with a first shifting thread (74), and
is both radially and axially mounted in said carrying part (4), and
said first swinging suspension (62) is
rotatably mounted on a first shifting thread (74) of said first adjusting member (72) by means of an own first internal thread (64), and is
provided with an adjustable joint head (66) situated on a first actuation axis (16) placed parallel with a first adjustment axis (15) of said first adjusting member (72),
which joint head (66) is connecting said first swinging suspension (62) with said reflector (5) in said first junction point (2).

4. A headlamp according to Claim 2 **characterized in that** said second adjustable connecting element (93) comprises a second adjusting member (73) and a second swinging suspension (63), whereby,
said second adjusting member (73) is provided with a second shifting thread (75), which second adjusting member (73) is both radially and axially mounted in said carrying part (4), and
said second swinging suspension (63) is rotatably mounted on said second shifting thread (75) of said second adjusting member (73) by means of an own second internal thread (65), and
said second adjustable connecting element (93) bears an automatic controller (8) of the light beam incidence distance,
which automatic controller (8) is firmly fixed to said second swinging suspension (63), whereby,
a second actuation axis (13) of an actuating member (83) of said automatic controller (8) is parallel with a longitudinal second adjustment axis (14) of said second adjusting member (73), and
said actuating member (83) is joint-connected with said reflector (5) in said second junction point (3).
